# EUROPEAN PATENT SPECIFICATION

(11) **EP 3 389 988 B1**
(45) Date of publication and mention of the grant of the patent: **26.10.2022**
(21) Application number: 16819812.5
(22) Date of filing: 14.12.2016
(51) Int. Cl.: B29C 63/00, B29C 63/04

(54) **METHOD AND APPARATUS FOR APPLYING A LAYER OF MATERIAL TO A LEADING EDGE OF A WIND TURBINE BLADE**
VERFAHREN UND VORRICHTUNG ZUM AUFBRINGEN EINER MATERIALSCHICHT AUF EINE VORDERKANTE EINER WINDTURBINENSCHAUFEL
PROCÉDÉ ET APPAREIL POUR L'APPLICATION D'UNE COUCHE DE MATÉRIAU SUR UN BORD D'ATTAQUE D'UNE PALE D'ÉOLIENNE

(30) Priority: 15.12.2015 GB 201522140
(43) Date of publication of application: 24.10.2018
(73) Proprietor: Vestas Wind Systems A/S, 8200 Aarhus N (DK)
(72) Inventor: BECH, Anton, 6950 Ringkøbing (DK); NIELSEN, Knud Stenbæk, 6900 Skjern (DK)
(74) Representative: Vestas Patents Department
(86) International application number: PCT/DK2016/050433
(87) International publication number: WO 2017/101949

(56) References cited:
- EP-A1- 0 350 979
- GB-A- 412 300
- US-A1- 2009 295 015

## Description

### Field of the invention

The invention relates to a method and apparatus for applying a layer of material to a leading edge of a wind turbine blade.

### Background to the invention

It is often necessary to apply layers of material such as paint, resin, adhesives, pre-cured polymer tapes, or other pre-shaped layers to the leading edge of a wind turbine blade during its manufacture and during on-site maintenance. For example, a thin layer of erosion-resistant paint is applied to the leading edge of the blade during manufacture to resist erosion of the leading edge due to precipitation and airborne particles while the blade is in use. During use, the erosion-resistant paint can be gradually eroded and it can therefore be necessary to re-apply the paint to the leading edge of the wind turbine blade on-site.

It is important that such paint is applied uniformly to the surface of the wind turbine blade. If the paint is not uniform, some regions will be too thin, and will not provide sufficient erosion resistance. An even layer is particularly important at the leading edge of the blade, because any roughness or inconsistencies at the leading edge will disturb the air flow around the blade and lead to a reduction in the aerodynamic efficiency of the wind turbine.

The erosion-resistant paint is typically applied by spraying or using a brush. However, it is difficult to apply such layers of material evenly and smoothly to the curved surface at the leading edge of a wind turbine blade. For example, in a typical two component erosion-resistant paint the paint is very fluid in its initial state when it has just been mixed, and has a low viscosity. When applied to the curved surface of the leading edge, the low viscosity means that the paint tends to run down the contours of the curves making it difficult to apply evenly. Shortly after the paint has been mixed, the paint begins to gel (within a few minutes) and the viscosity of the paint increases; however, in this gelled state it is too viscous to be spread evenly and smoothly. Given that the paint has a low gel point (meaning that it gels quickly) there is therefore only a very short window in which the paint is at a viscosity that is suitable for even spreading. Thus, it is very difficult to achieve a paint viscosity that allows even application of the paint to the leading edge of the wind turbine blade.

Pre-cured polymer tapes are typically attached manually using adhesives applied to a blade-facing surface of the tape. However, applying tapes in this way requires significant skill and diligence. If the tape is not skilfully applied, the tape may be uneven or damaged.

It would be desirable to overcome or mitigate the problems described above.

US2009/295015 discloses a technology utilising an apparatus with a flexible reconfigurable substrate.

### Summary of the invention

Against this background, the invention resides in apparatus for applying a layer of material to a leading edge of a wind turbine blade. The apparatus comprises a flexible substrate capable of supporting the layer of material, the flexible substrate being reconfigurable between convex and concave configurations, and a support structure for supporting the flexible substrate in the concave and convex configurations. The flexible substrate and support structure are configured such that in use, with the flexible substrate in the convex configuration, the layer of material can be offered up to the leading edge of the wind turbine blade in a convex form to define an initial area of contact between the layer of the material and the leading edge, and thereafter the flexible substrate can be reconfigured into the concave configuration by increasing the area of contact between the layer of material and the leading edge, such that the layer of material is applied to, and adopts to the contours of, at least a portion of the leading edge.

By virtue of the flexible substrate that can be reconfigured between convex and concave configurations, a layer of material of predetermined thickness can be gradually and gently wrapped around the leading edge of the blade as the flexible membrane is reconfigured to adopt the contours of at least a portion of the leading edge. Over the majority of the layer of material, away from edge regions of the layer, this gentle wrapping motion allows the layer of material to be brought into contact with the leading edge substantially without displacing the material in the majority of the layer of material, so that the majority of the layer remains at the pre-determined thickness. As the wrapping motion continues to an end region of the layer, a small amount of material in the edge region may be displaced outwards so that the material in the edge region tapers to zero thickness.

The resulting layer of material that is applied to the leading edge of the blade is therefore of the predetermined thickness throughout the majority of the layer, so that the thickness of the layer can be easily and reliably controlled, but can be of tapering thickness in the edge region of the layer, thereby avoiding any 'step' on the leading edge where the layer of material ends, which improves the aerodynamic performance of the blade.

By "flexible" is meant that the substrate can be deformed elastically. In particular, the substrate can be deformed elastically to adopt to the contour of the leading edge of the blade

The support may be configured to support the flexible substrate such that the flexible substrate is reconfigurable from the convex configuration to the concave configuration upon pressing the flexible substrate against the leading edge of the wind turbine blade. In this way, the flexible substrate can be quickly and easily reconfigured simply by causing relative movement of the leading edge and the substrate towards one another.

The support and flexible substrate may together define a container having an internal volume, and the shape of the internal volume may change when the flexible substrate is reconfigured between the convex configuration and the concave configuration. The convex and concave shapes are viewed from outside the container.

The support may comprise an air supply configured to control air pressure in the internal volume to inflate and/or deflate the flexible substrate. The air supply is a particularly simple and effective means of controlling the configuration of the substrate.

The support may be configured to provide a pressure above ambient pressure when the flexible substrate is in the convex configuration so as to inflate the flexible substrate. In this way, the substrate can be easily brought into, and maintained in, the convex configuration by inflating the substrate.

The air supply may be configured to provide additional air to the internal volume when the support is in the concave configuration to cause the flexible substrate to exert pressure on the leading edge of the wind turbine blade. Such a pressure assists in transferring the layer of material to the leading edge.

The support structure may be configured to support the flexible substrate such that the flexible substrate is further reconfigurable into an application configuration during application of the layer of material to the flexible substrate. The application configuration may be selected to be a configuration in which it is relatively easy to apply a layer of material to the substrate compared to the convex configuration.

When part of the flexible substrate is in the application configuration, the flexible substrate may be substantially flat. A flat configuration is particularly beneficial, as it is relatively easy to apply a layer of uniform thickness to the substrate when it is substantially flat. The support structure may comprise a flat support surface for supporting the flexible substrate in the application configuration during application of the layer of material to the flexible substrate.

The flat support surface may be defined by a piston that is movable into and out of contact with the flexible substrate. This allows the flexible substrate to be easily configured into the flat application configuration by moving the piston.

The apparatus may comprise an applicator for applying a layer of material to the flexible substrate. In this way, the layer of material can be applied to the flexible substrate in the vicinity of the wind turbine blade and applied to the leading edge while the layer is still fresh. This is particularly advantageous for liquid layers which may otherwise begin to set or cure.

The applicator may comprise a container provided with slot for dispensing the material onto the flexible substrate. The slot is a simple and effective means of controlling the thickness of the layer of material applied to the substrate. The slot may be, for example of a predetermined constant height or of a predetermined height of varying thickness.

The flexible substrate may be a flexible membrane. The flexible membrane may have a thickness that is less than approximately 2 mm. Such a thickness provides a particularly soft membrane, which encourages particularly gentle wrapping of the membrane around the leading edge, which minimises displacement of the material even further. To this same end, the flexible membrane may alternatively or additionally be made of a silicon rubber or of another plastics material such as polyurethane, polyethylene, polypropylene or nylon. The silicon rubber also provides a particularly smooth finish when the substrate is removed from the layer of material

The support may comprise a heater for heating the flexible substrate to assist curing of the layer of material if required.

From another aspect, the invention resides in a method of applying a layer of material to a leading edge of a wind turbine blade. The method comprises providing a layer of material applied on a flexible substrate, arranging the flexible substrate in relation to the leading edge of the wind turbine blade with the flexible substrate in a presentation configuration such that an initial area of contact is defined between the layer of material and the leading edge, reconfiguring the flexible substrate into a transfer configuration in which the flexible substrate adopts to the contours of the leading edge by increasing the area of contact between the layer of material and the leading edge, and transferring the layer of material from the flexible substrate to the leading edge of the wind turbine blade.

The substrate is 'flexible' so that it can be deformed elastically. In particular, the substrate can be deformed elastically between the presentation and transfer configurations; so that the substrate adopts to the contours of the leading edge of the blade.

The method may comprise causing relative displacement of the flexible substrate and the leading edge towards one another to increase the area of contact and reconfigure the flexible substrate into the transfer configuration.

When the flexible substrate is in the presentation configuration, the flexible substrate may be arranged to present a substantially convex surface to the leading edge of the wind turbine blade.

The method may comprise inflating the flexible substrate to arrange the flexible substrate in the presentation configuration. Inflating the substrate is a simple means of maintaining the substrate in the presentation configuration whilst allowing the substrate to be quickly and easily moved into the transfer configuration. To this end, the method may comprise inflating the flexible substrate by providing an air pressure that is high enough to maintain the substrate in a convex configuration in the absence of external force, but low enough to allow the substrate to deform into the transfer configuration.

The step of transferring the layer of material from the flexible substrate to the leading edge of the wind turbine blade may comprise increasing the air pressure when the substrate is in the transfer configuration to push the flexible substrate against the leading edge of the wind turbine blade. Pushing the flexible substrate against the leading edge in this way encourages faster and more complete transfer of the layer of material.

When the flexible substrate is in the transfer configuration, the flexible substrate may be substantially concave.

The step of providing a flexible substrate having a layer of material applied thereon may comprise applying a layer of material to a flexible substrate.

The method may comprise arranging the flexible substrate in a substantially flat application configuration before applying the layer of material to the flexible substrate. A substantially flat application configuration is particularly advantageous as the layer of material is easier to apply when the flexible substrate is flat. To this end, the method may comprise supporting the flexible substrate against a substantially flat support surface.

The layer of material applied to the flexible substrate may comprise a liquid layer.

The layer of material applied to the flexible substrate may comprise a solid layer.

The layer of material applied to the flexible substrate may comprise a solid film to which a layer of adhesive is applied.

For particularly effective transfer, the step of transferring the layer of material from the flexible substrate to the leading edge of the wind turbine blade may comprise curing the layer of material on the flexible substrate.

It is envisaged that preferred and/or optional features described above in relation to one aspect of the invention may apply to the other aspects of the invention as appropriate, either alone or in combination.

### Brief description of the drawings

In order that the present invention may be more readily understood, examples of the invention will now be described with reference to the remaining figures, in which:
Figures 1a and 1b, are respectively, a perspective view of a wind turbine blade and an apparatus for applying a layer of material to a leading edge of a wind turbine blade according to an aspect of the invention;
Figure 2a is a cross-sectional view of a substrate support forming part of the apparatus of Figure 1b in an application configuration, Figure 2b is a cross-sectional view of the substrate support of Figure 2a in a presentation configuration and Figure 2c is a cross-sectional view of the substrate support of Figure 2a in a transfer configuration;
Figure 3a is a schematic view of an applicator forming part of the apparatus of Figure 1, and Figure 3b is a perspective view of a dispensing container forming part of the applicator of Figure 3a;
Figure 4 is a cross-sectional view of the substrate support of Figure 2a before it has been arranged in the application configuration;
Figure 5 is a cross-sectional view of the substrate support of Figure 2a in the application configuration;
Figure 6 is a cross-sectional view of the substrate support of Figure 2a in the first undergoing application of a layer of material using the applicator of Figure 3a;
Figure 7 is a cross-sectional view of the substrate support of Figure 2a with the layer of material applied and being offered up to a leading edge of a wind turbine blade;
Figure 8 is a cross-sectional view of the substrate support of Figure 2a in the presentation configuration when the layer of material is in contact with the leading edge of the wind turbine blade;
Figure 9 is a cross-sectional view of the substrate support of Figure 2a with the substrate being wrapped around the leading edge of the wind turbine blade;
Figure 10 is a cross-sectional view of the substrate support of Figure 2a during transfer of the layer of material from the membrane to the leading edge of the wind turbine blade;
Figure 11 is a cross-sectional view of the substrate support of Figure 2a after transfer of the layer of material from the membrane to the leading edge of the wind turbine blade, and the wind turbine blade having the layer of material thereon; and
Figure 12a to 12d are schematic illustrations of a method of applying a solid layer of material to a leading edge of a wind turbine blade.

It will be appreciated them the elements illustrated in the Figures are not drawn to scale.

### Detailed description of embodiments of the invention

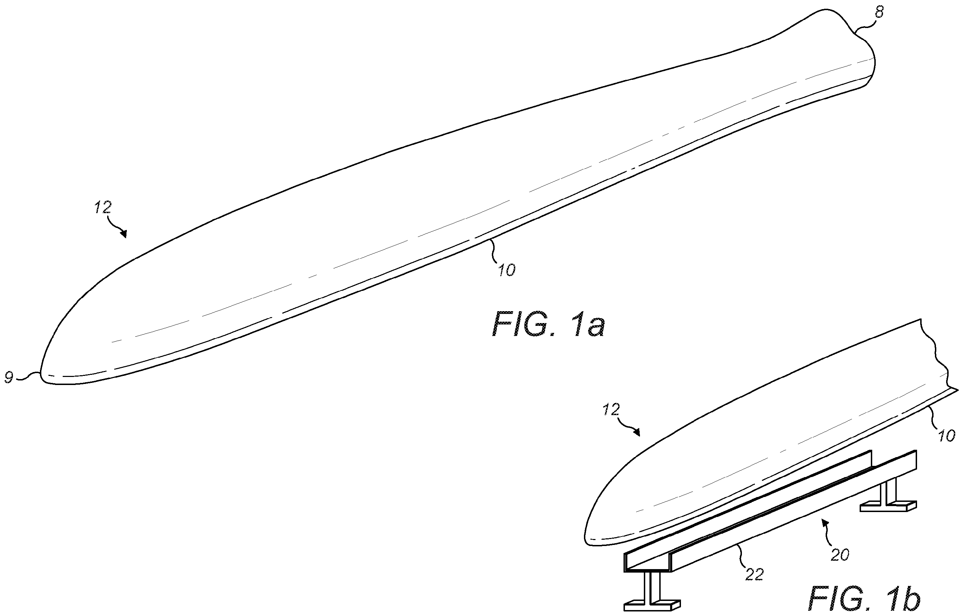

Figure 1a illustrates a wind turbine rotor blade 12 which extends from a root end 8 to a tip end 9. The blade comprises a leading edge 10 to which a layer of material is applied as described further below. Figure 1b shows a section of the blade 12 at its tip end and apparatus 20 for applying a layer of material to the leading edge 10 of the blade 12.

In the context of this invention, the leading edge 10 is the edge region to which the layer of material will be applied, and includes the very tip of the leading edge 10 as well as the area surrounding the tip to which the layer of material will be applied.

The layer of material may take many different forms. For example, the layer of material may be a paint, or it may be another material such as a resin (for example a polyurethane, epoxy or methacrylate resin) or other coating. The layer may be fully cured or it may be partially cured. In the forgoing exemplary embodiment, the layer of material takes the form a layer of liquid paint.

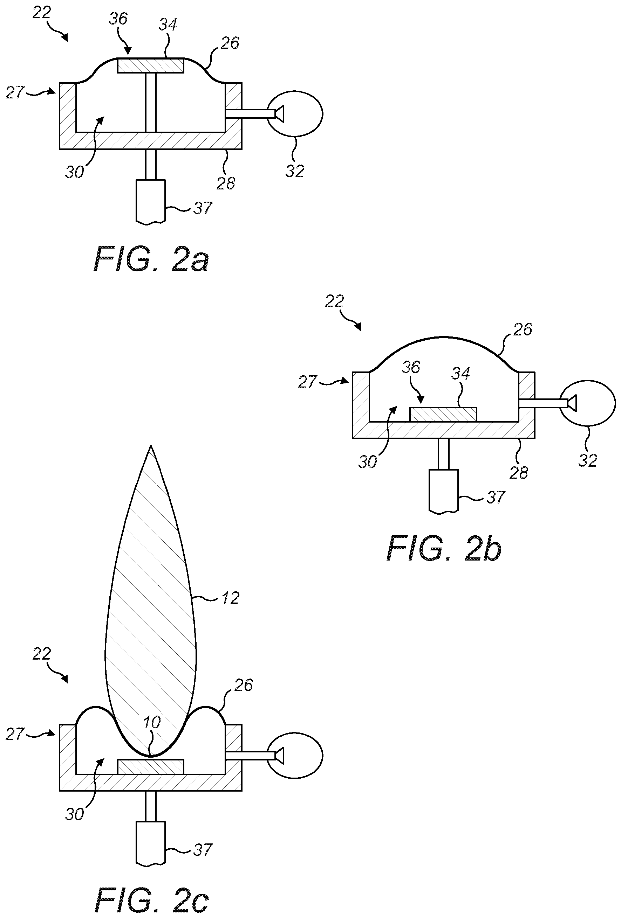

The apparatus 20 comprises a substrate support 22.Figures 2a to 2c show the substrate support 22 in more detail. Referring to Figure 2a, the substrate support 22 comprises a flexible substrate 26 in the form of a flexible membrane and a support structure 27 that supports the membrane 26.

The membrane 26 is made of a soft, flexible material, such as a silicon rubber. Alternatively, the membrane 26 may be made from another suitable plastics material such as polyurethane, polyethylene, polypropylene or nylon. The membrane has a thickness of less than 2mm, and preferably less than 1mm. In this way, the membrane is flexible so as to allow easy reconfiguration of the membrane.

The support structure 27 also comprises a frame 28. The flexible membrane 26 extends over the frame 28, such that the frame 28 and the flexible membrane 26 together define a container having an internal volume 30. A gas supply 32 supplies air or other gas to the internal volume 30 to control the pressure in the internal volume 30.

The support structure 27 also comprises a flat support surface 34 capable of supporting at least a portion of the flexible membrane 26 in a flat configuration. The flat support surface 34 defines the upper surface of a piston 36. The piston 36 can be moved up and down, such that the flat support surface 34 is moved into and out of contact with the flexible membrane 26. The piston 36 is received in cylinder 37, from which it can be extended and retracted to move the flat support surface 34 upwards and downwards.

As shown in Figures 2a to 2c, the support structure 27 is configured such that the flexible membrane 26 is capable of adopting three different configurations.

The first configuration is an application configuration, shown in Figure 2a, in which at least a portion of the flexible membrane 26 is substantially flat. In particular, the piston 36 is extended upwardly, so that the flat support surface 34 is in contact with the flexible membrane 26 and the flexible membrane is forced to adopt a flat configuration.

The second configuration is a presentation configuration shown in Figure 2b, in which the flexible membrane 26 is presented to the leading edge of the wind turbine blade (not shown in Figure 2b). In the presentation configuration, the flexible membrane 26 is in a convex state. In particular, the flexible membrane 26 is inflated. The inflation is achieved by pressurising the internal volume 30 defined by the frame 28 and the flexible membrane 26 to a pressure slightly above ambient pressure by allowing gas to flow into the internal volume 30 via the gas supply means 32. In this configuration the flat support surface 34 is in a retracted state and lies against the frame 28.

The third configuration is a transfer configuration, shown in Figure 2c, in which the flexible membrane 26 has adopted the contours of the curved surface of the leading edge 10 of the wind turbine blade 12. Here the wind turbine blade 12 is shown in cross section so that an airfoil portion can be seen. In this configuration at least a portion of the flexible membrane 26 is substantially concave. This concave configuration is caused by pushing the flexible membrane 26 against the leading edge 10 of the wind turbine blade 12. The pressure in the internal volume 30 is low enough that the flexible membrane 26 can be easily deformed, but high enough that the pressure tends to force the flexible membrane 26 against the wind turbine blade 12, thereby forcing the flexible membrane 26 to adopt the contours of the leading edge 10 of the wind turbine blade 12 as the membrane 26 is pushed against the leading edge 10.

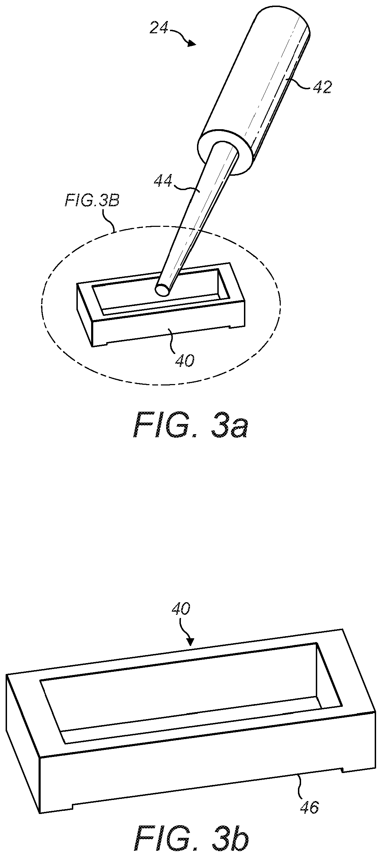

Figures 3a and 3b illustrate in further detail the apparatus 20 for applying a layer of material to the leading edge 10 of the blade 12. The apparatus also comprises an applicator 24 for applying a layer of material to the flexible membrane 26 of the substrate support 22.

Referring to Figure 3a, the applicator 24 comprises a dispensing container 40 for holding the material to be applied, a storage volume 42 for storing the material and a transmission means 44 for transmitting the material from the storage volume 42 to the dispensing container 40.

As seen in Figure 3b, the dispensing container 40 is formed as a frame, with four side walls and no top or bottom surface. A front wall of the dispensing container comprises a slot 46. In use, material is dispensed through the slot 46 onto the flexible membrane 26 (not visible in Figure 3b).

In the embodiment shown, the storage volume 42 is a substantially cylindrical tube that is sealed at both ends, and the transmission means 44 is a length of flexible pipe that joins the storage volume 42 to the dispensing container 40.

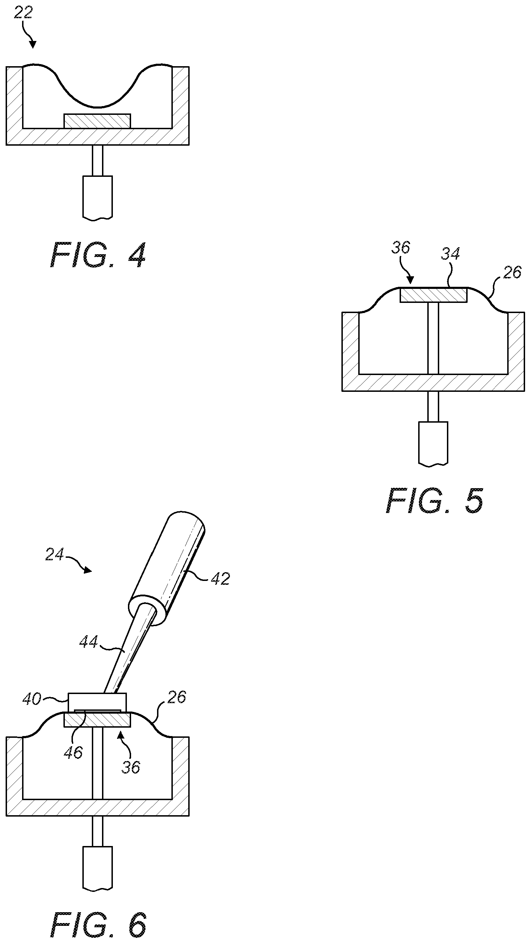

The use of the apparatus 20 in applying the layer of material to the leading edge 10 of the wind turbine blade 12 will now be described with reference to Figures 4 to 12.

Referring to Figure 4, the substrate support 22 is provided in the vicinity of the wind turbine blade (not shown). As shown in Figure 5, the piston 36 is then raised so as to come into contact with the flexible membrane 26. In this way, the flat support surface 34 defined by the piston 36 supports the flexible membrane 26 in the application configuration.

Next, a layer of material having a predetermined thickness, in this case liquid paint, is applied to the flat portion of the flexible membrane 26 using the applicator 24, as shown in Figure 6. The liquid paint is passed from the storage volume 42 to the dispensing container 40 via the transmission means 44. Once in the dispensing container 40, liquid paint is dispensed onto the flexible membrane 26 from the slot 46. The applicator 24 is dragged along the length of the flexible membrane to apply the layer of paint along the entire length or just part of the length of the flexible membrane.

The resulting layer of material is of a uniform and predetermined thickness that is controlled by the size and shape of the slot 46. The layer of material may be of any suitable predetermined thickness, and is typically between 0.5 mm and 1 mm thick, though layers are also envisaged that are 5 mm or more in thickness. If the desired width of the layer of material is greater than that of the width of the slot 46, the applicator can be used to apply multiple layers of material in parallel on the substrate.

After application, the liquid paint 50 may be allowed to partially gel, but to a stage where it is not yet fully cured. In particular the liquid paint may be allowed to gel until it just has a sufficiently high viscosity that it will not flow under the action of gravity. This may take less than 5 minutes, and may, for example require a period of only 1 minute. At this stage, the membrane 26 can be moved without disturbing the layer of liquid material.

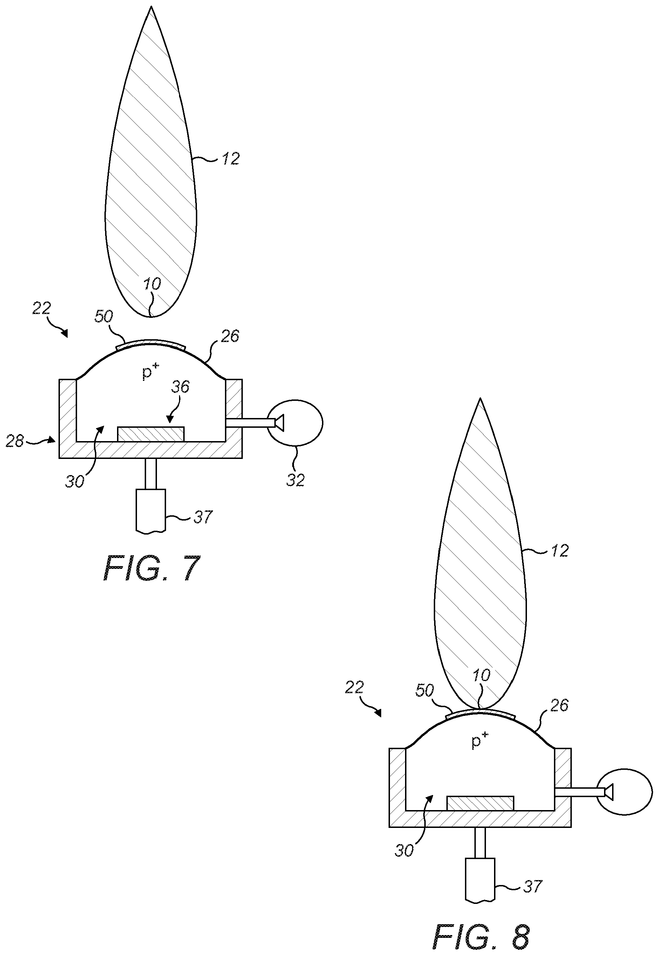

As shown in Figure 7, with the layer of material 50 now applied to the flexible substrate 26, the layer of material 50 is then offered up to the leading edge 10 of the wind turbine blade 12. The piston 36 is retracted into the cylinder 37 and the gas supply 32 supplies air to the internal volume 30 of the container defined by the frame 28 and the flexible membrane 26 to inflate the flexible membrane 26. Enough air is supplied to hold the flexible membrane 26 in an inflated state, but the air pressure is low enough to allow deformation of the flexible membrane 26 into the transfer configuration when required. For example, the air pressure may be between approximately 0.2 kPa and 5 kPa.

Once inflated, the gas supply 32 is turned off and the flexible membrane 26 that faces the leading edge 10 is in a convex state.

As shown in Figure 8, the flexible substrate 26 and the leading edge 10 are then arranged relative to one another such that the layer of material 50 and the leading edge 10 are in contact with one another and the flexible membrane is now in the presentation configuration. This may be achieved by moving the substrate support 22 towards the leading edge 10 or vice versa.

Because the flexible substrate 26 and the leading edge 10 are both convex, the initial area of contact between the layer of material 50 and the leading edge 10 is relatively small, in this case being defined by a line of contact that runs down the tip of the leading edge 10 of the wind turbine blade 12.

The flexibility of the membrane 26, the relatively soft and thin material from which the membrane 26 is made, and the fact that the pressure in the internal volume 30 is only just enough to keep the membrane inflated and convex, means that the layer of material 50 and the leading edge 10 can be brought into contact with one another very gently. If the layer of material 50 is in the form of a liquid paint the very gentle initial contact over a relatively small initial area means that there is very little displacement of the liquid paint within the layer of material 50 as contact is made. Thus, the layer of material 50 remains at, or very close to, the predetermined thickness.

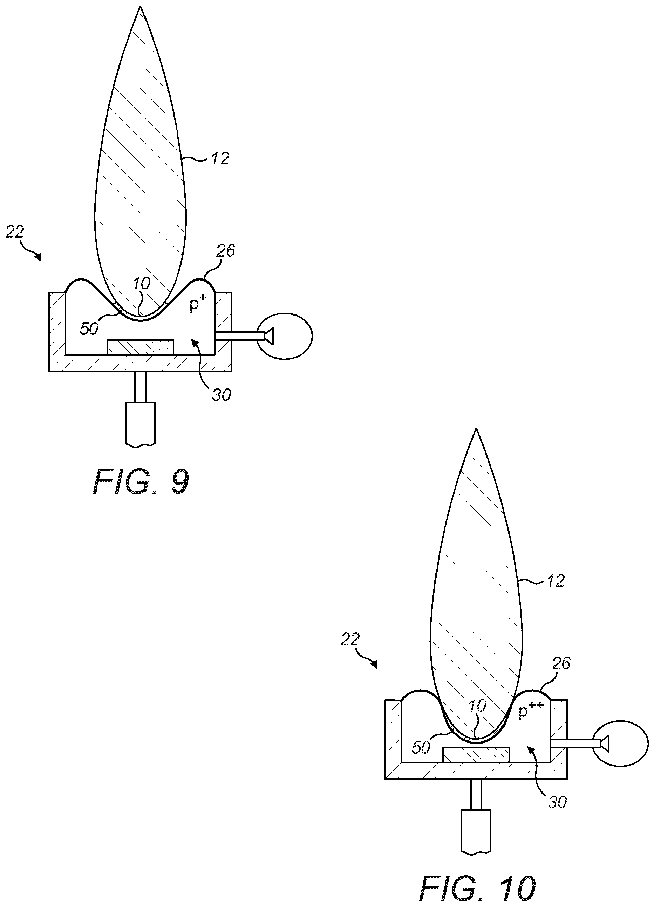

The flexible membrane 26 is then pushed against the leading edge 10 of the blade 12, as shown in Figure 9. Because there is a pressure in the internal volume 30 that is greater than ambient pressure, the flexible membrane 26 is pushed gently against the leading edge 10 of the wind turbine blade 12. As the flexible membrane 26 is pushed further against the leading edge 10, more of the flexible membrane 26 is pushed into contact with the leading edge 10. Thus, the area of contact between the layer of material 50 and the leading edge 10 gradually increases, with the area of contact growing outwardly towards edges of the flexible membrane 26. The flexible membrane 26 therefore gradually wraps around the leading edge 10, adopting the contours of the leading edge 10 as it does so.

Gradually increasing the area of contact so as to grow the area towards the edges of the membrane means that the contact can remain consistently gentle, so as to avoid displacement of the liquid paint within the layer of material 50 as the area of contact increases. Growing the area of contact in this way also tends to cause air to be effectively expelled towards the edges of the membrane as the area of contact grows, which guards against air bubbles becoming trapped between the layer of material 50 and the leading edge 10 of the wind turbine blade 12.

Thus, the flexible membrane 26 and hence the layer of material 50 are wrapped around the leading edge 10 of the wind turbine blade 12, so that the layer of material 50 is forced to adopt the contours of the leading edge 10 of the wind turbine blade 12. The layer of material 50 on the flexible membrane 26 also adopts to the contours of the leading edge 10.

As the area of contact reaches the edge of the layer of material 50, some of the material in the edge region is displaced slightly outwardly (i.e. toward the trailing edge of the blade). The flexible membrane 26 tends to smooth this material out as it is wrapped around the leading edge 10 to give a layer thickness that tapers to zero in the edge region. In this way, the wrapping motion provides a layer that is of substantially uniform thickness throughout the bulk of the layer, but provides a small edge region in which the thickness of the layer tapers to zero.

Once the flexible membrane 26 has been sufficiently wrapped around the leading edge 10, the flexible membrane 26 is in the transfer configuration, which is shown in Figure 10.

The layer of material 50 is then transferred to the leading edge 10 of the wind turbine blade 12.

During the transfer stage, the pressure in the internal volume 30 can be increased. For example, the pressure may be increased to a pressure between 0.5 kPa and 10 kPa. Increasing the pressure causes the layer of material 50 to be pushed against the leading edge 10 with greater force, thereby assisting transfer.

The layer of material 50 is then allowed to fully cure. This may involve simply waiting for a period of time for the material to cure at room temperature. It may also involve heating the layer of material to facilitate curing. To this end, a heating means (not shown) may be incorporated into the substrate support to heat the flexible membrane. Because the surface of the flexible membrane 26 is smoother than the surface of the leading edge 10 of the blade 12, the layer of material 50 tends to bond more strongly to the surface of the leading edge 10 of the blade 10, and is thereby transferred from the flexible membrane 26 to the leading edge 10.

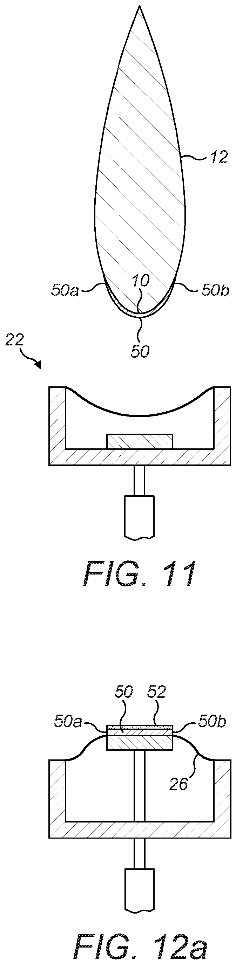

Once a sufficient time period has elapsed the flexible membrane 26 is moved gently away from the leading edge 10 of the blade 12. The layer of material 50 remains in contact with the leading edge 10 as the flexible membrane 26 is moved away, as shown in Figure 11. The layer of material is of substantially uniform and pre-determined thickness, with substantially no air bubbles, and is effectively bonded to the leading edge 10 of the wind turbine blade 10.

While the majority of the layer of paint is of uniform thickness, at edge regions 50a, 50b of the layer of material the thickness of the paint tapers to zero towards the edge. As a result, there is no step at the edge of the paint layer, unlike in conventional painting in which there is a step at the edge of the paint. The absence of the step at the edge of the paint layer gives the blade an improved aerodynamic performance during operation of the wind turbine blade.

The apparatus 20 can then be used to apply further layers of material at different spanwise locations on the leading edge.

A single piece of apparatus 20 may be used to apply the layer of material to the entire leading edge if desired. Alternatively, a single piece of apparatus 20 may be use to apply the layer of material to only a part of the leading edge, and multiple sets of apparatus may be required to apply the layer of material to the entire leading edge.

In the embodiment described, the layer of material that is applied to the blade is a layer of liquid paint. However, the material need not be liquid paint. For example, the material may be an adhesive or resin or a layer of solid paint.

In the example of a applying a layer of solid paint to the blade, after application of liquid paint onto the membrane 26, the liquid paint 50 is allowed to fully cure. At this stage, the membrane 26 can be moved without disturbing the layer of liquid material. The solid layer of paint can then be affixed to the blade with adhesive. Alternatively, the liquid paint may be applied to another surface where it is allowed to cure, and it is then transferred to the membrane 26.

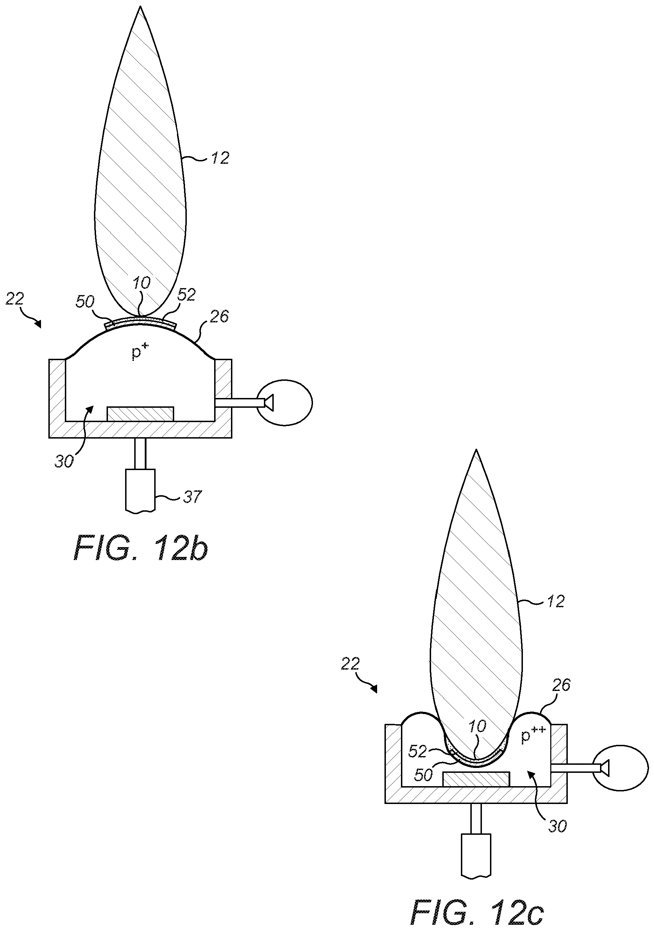

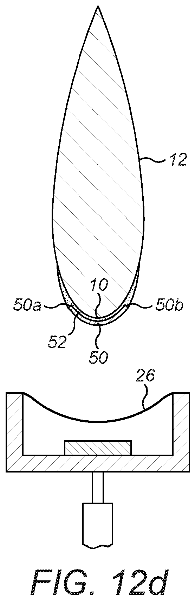

Figures 12 to 12d describe how a layer of a solid material is applied to the leading edge.

For example, as shown in Figure 12a a solid film of a material 50 may be applied to the membrane 26 simply by placing it on the membrane 26 in a desired location. A layer of adhesive 52 may then be applied to the surface of the film 50, using the applicator 24 described, or by other means. The membrane 26 may then be arranged in the presentation configuration as shown in Figure 12b, and the film 50 and adhesive 52 may then be offered up to the leading edge in the same way as described above. The membrane 26 and hence the solid film 50 and adhesive layer 52 may then be wrapped around the leading edge in the same way as described above, as shown in Figure 12c. The layers 50, 52 may then be transferred to the leading edge 10 as shown in Figure 12c, for example by curing the adhesive to adhere the solid film to the leading edge 10. In particular, the solid film may take the form of a pre-dried film of paint, and the liquid adhesive may take the form of the paint in a liquid state, which acts an adhesive. Alternatively the adhesive may have been pre-applied to the solid film before it is placed on the membrane.

Thus, the flexible membrane 26 and hence the solid film of a material 50 are wrapped around the leading edge 10 of the wind turbine blade 12, so that the layer of material 50 is forced to adopt the contours of the leading edge 10 of the wind turbine blade 12. The layer of material 50 on the flexible membrane 26 also adopts the contours of the leading edge 10.

As the area of contact reaches the edges 50a, 50b of the layer of material 50, some of the liquid adhesive material 52 that sits between the solid layer 50 and the leading edge 10 in the edge region is displaced slightly outwardly (i.e. toward the trailing edge of the blade), beyond the edge of the solid layer. The flexible membrane 26 tends to smooth this adhesive out as it is wrapped around the leading edge 10 to give a layer thickness that tapers to zero in the edge region, as can be seen in Figure 12d.

In this way, the wrapping motion provides a layer that is of substantially uniform thickness throughout the bulk of the layer, but provides a small edge region in which the thickness of the layer tapers to zero. As a result, there is no step at the edges 50a, 50b of the solid layer 50 and no need to finish the application by hand to remove any excess materials. The absence of the step at the edge of the layer gives the blade an improved aerodynamic performance during use.

Although the invention is particularly effective in applying uniform layers of material to a leading edge of a wind turbine blade, it is also envisaged that the invention may be used to apply layers of non-uniform thickness. For example, the slot in the dispensing container may be shaped to as to provide a layer of varying thickness.

Although in the embodiment described the layer of liquid material is applied using an applicator of the sort shown in Figures 3a and 3b, the layer of liquid material could be applied by other means, for example by pouring the liquid material onto the surface or using a device such as a brush or spatula.

Embodiments of the invention are envisaged in which the piston is omitted and the flat support surface is instead provided by, for example, the base wall of the frame that lies beneath the flexible membrane. In such embodiments, the flexible membrane may be allowed to slacken, such that it lies against the flat base wall, thereby adopting a flat configuration.

The method and apparatus described can be used to apply a layer of material to the leading edge of the wind turbine blade during manufacture of the blade, or they can be used to apply a layer of material to the leading edge of the wind turbine blade when it is installed on wind turbine. In this case, the support structure described can be attached to the blade via a vacuum system, to hold the system in place on the blade during application of the layer of material.

The present invention is therefore not limited to the exemplary embodiments described above and many other variations or modifications will be apparent to the skilled person without departing from the scope of the present invention as defined in the following claims.

## Claims

1. Apparatus (20) for applying a layer of material (50) to a leading edge (10) of a wind turbine blade (12), the apparatus comprising:
a flexible substrate (26) capable of supporting the layer of material (50), the flexible substrate being reconfigurable between convex and concave configurations; and
a support structure (27) for supporting the flexible substrate (26) in the concave and convex configurations,
wherein, the flexible substrate (26) and support structure (27) are configured such that in use, with the flexible substrate in the convex configuration, the layer of material (50) can be offered up to the leading edge (10) of the wind turbine blade (12) in a convex form to define an initial area of contact between the layer of the material and the leading edge, and thereafter the flexible substrate can be reconfigured into the concave configuration by increasing the area of contact between the layer of material and the leading edge, such that the layer of material is applied to, and adopts to the contours of, at least a portion of the leading edge.

2. The apparatus of Claim 1, wherein the support structure (27) is configured to support the flexible substrate (26) such that the flexible substrate is reconfigurable from the convex configuration to the concave configuration upon pressing the flexible substrate against the leading edge (10) of the wind turbine blade (12).

3. The apparatus of Claim 1 or Claim 2, wherein the support structure (27) and flexible substrate (26) together define a container having an internal volume (30), and wherein the shape of the internal volume changes when the flexible substrate is reconfigured between the convex configuration and the concave configuration.

4. The apparatus of Claim 3, wherein the support structure (27) comprises an air supply configured to control air pressure in the internal volume (30) to inflate and/or deflate the flexible substrate (26).

5. The apparatus of any preceding claim, wherein the support structure (27) is configured to support the flexible substrate (26) such that the flexible substrate is further reconfigurable into an application configuration during application of the layer of material (50) to the flexible substrate.

6. A method of applying a layer of material (50) to a leading edge (10) of a wind turbine blade (10), the method comprising:
providing a layer of material (50) applied on a flexible substrate (26);
arranging the flexible substrate (26) in relation to the leading edge (10) of the wind turbine blade (12) with the flexible substrate in a presentation configuration such that an initial area of contact is defined between the layer of material and the leading edge;
reconfiguring the flexible substrate (26) into a transfer configuration in which the flexible substrate adopts to the contours of the leading edge (10) by increasing the area of contact between the layer of material and the leading edge; and
transferring the layer of material from the flexible substrate (26) to the leading edge (10) of the wind turbine blade.

7. The method of Claim 6, comprising causing relative displacement of the flexible substrate (26) and the leading edge (10) towards one another to increase the area of contact and reconfigure the flexible substrate into the transfer configuration.

8. The method of Claim 6 or Claim 7, wherein, when the flexible substrate (26) is in the presentation configuration, the flexible substrate is arranged to present a substantially convex surface to the leading edge (10) of the wind turbine blade (12).

9. The method of Claim 8, comprising inflating the flexible substrate (26) to arrange the flexible substrate in the presentation configuration.

10. The method of Claim 9, comprising inflating the flexible substrate (26) by providing an air pressure that is high enough to maintain the substrate in a convex configuration in the absence of external force, but low enough to allow the substrate to deform into the transfer configuration.

11. The method of any of Claims 6 to 10, wherein, when the flexible substrate (26) is in the transfer configuration, the flexible substrate is substantially concave.

12. The method of Claims 6 to 11, wherein the layer of material (50) applied to the flexible substrate (26) comprises a liquid layer.

13. The method of Claims 6 to 12, wherein the layer of material (50) applied to the flexible substrate (26) comprises a solid layer.

14. The method of Claim 13, further comprising applying a layer of adhesive (52) to the solid layer.

15. The method of Claim 14, wherein the step of transferring the layer of material (50) from the flexible substrate (26) to the leading edge (10) of the wind turbine blade (12) comprises curing the layer of material on the flexible substrate.

## Patentansprüche

1. Vorrichtung (20) zum Aufbringen einer Materialschicht (50) auf eine Blattvorderkante (10) eines Windkraftanlagenblattes (12), wobei die Vorrichtung Folgendes umfasst:
ein flexibles Substrat (26), das in der Lage ist, die Materialschicht (50) zu tragen, wobei das flexible Substrat zwischen konvexen und konkaven Konfigurationen rekonfigurierbar ist; und
eine Trägerstruktur (27) zum Tragen des flexiblen Substrats (26) in den konkaven und konvexen Konfigurationen,
wobei das flexible Substrat (26) und die Trägerstruktur (27) so konfiguriert sind, dass bei Verwendung, mit dem flexiblen Substrat in der konvexen Konfiguration, die Materialschicht (50) bis zur Blattvorderkante (10) des Windkraftanlagenblatts (12) in einer konvexen Form bereitgestellt werden kann, um einem anfänglichen Kontaktbereich zwischen der Materialschicht und der Blattvorderkante zu definieren, und danach das flexible Substrat in die konkave Konfiguration rekonfiguriert werden kann, indem der Kontaktbereich zwischen der Materialschicht und der Blattvorderkante erhöht wird, sodass die Materialschicht auf mindestens einen Abschnitt der Blattvorderkante aufgebracht wird und sich an deren Konturen anpasst.

2. Vorrichtung nach Anspruch 1, wobei der Trägerstruktur (27) konfiguriert ist, um das flexible Substrat (26) zu tragen, sodass das flexible Substrat von der konvexen Konfiguration in die konkave Konfiguration rekonfigurierbar ist, sobald das flexible Substrat gegen die Blattvorderkante (10) des Windkraftanlagenblatts (12) gedrückt wird.

3. Vorrichtung nach Anspruch 1 oder Anspruch 2, wobei die Trägerstruktur (27) und das flexible Substrat (26) zusammen einen Behälter definieren, der ein inneres Volumen (30) aufweist, und wobei sich die Form des inneren Volumens ändert, wenn das flexible Substrat zwischen der konvexen Konfiguration und der konkaven Konfiguration rekonfiguriert wird.

4. Vorrichtung nach Anspruch 3, wobei die Trägerstruktur (27) eine Luftzufuhr umfasst, die konfiguriert ist, um den Luftdruck im inneren Volumen (30) zu steuern, um das flexible Substrat (26) aufzublasen und/oder zu entleeren.

5. Vorrichtung nach einem vorstehenden Anspruch, wobei die Trägerstruktur (27) konfiguriert ist, um das flexible Substrat (26) zu tragen, sodass das flexible Substrat während des Aufbringens der Materialschicht (50) auf das flexible Substrat weiter in eine Aufbringungskonfiguration rekonfigurierbar ist.

6. Verfahren zum Aufbringen einer Materialschicht (50) auf eine Blattvorderkante (10) eines Windkraftanlagenblattes (10), wobei das Verfahren Folgendes umfasst:
Bereitstellen einer Materialschicht (50), die auf ein flexibles Substrat (26) aufgebracht wird;
Anordnen des flexiblen Substrats (26) in Bezug auf die Blattvorderkante (10) des Windkraftanlagenblatts (12), wobei das flexible Substrat in einer Präsentationskonfiguration konfiguriert ist, sodass ein anfänglicher Kontaktbereich zwischen der Materialschicht und der Blattvorderkante definiert ist;
Rekonfigurieren des flexiblen Substrats (26) in eine Übertragungskonfiguration, in der sich das flexible Substrat an die Konturen der Blattvorderkante (10) anpasst, indem der Kontaktbereich zwischen der Materialschicht und der Blattvorderkante erhöht wird; und
Übertragen der Materialschicht von dem flexiblen Substrat (26) auf die Blattvorderkante (10) des Windkraftanlagenblatts.

7. Verfahren nach Anspruch 6, umfassend das Veranlassen einer relativen Verschiebung des flexiblen Substrats (26) und der Blattvorderkante (10) aufeinander zu, um den Kontaktbereich zu erhöhen und das flexible Substrat in die Übertragungskonfiguration zu rekonfigurieren.

8. Verfahren nach Anspruch 6 oder Anspruch 7, wobei das flexible Substrat (26), wenn es sich in der Präsentationskonfiguration befindet, so angeordnet ist, dass es im Wesentlichen eine konvexe Oberfläche zur Blattvorderkante (10) des Windkraftanlagenblatts (12) aufweist.

9. Verfahren nach Anspruch 8, umfassend das Aufblasen des flexiblen Substrats (26), um das flexible Substrat in der Präsentationskonfiguration anzuordnen.

10. Verfahren nach Anspruch 9, umfassend das Aufblasen des flexiblen Substrats (26) durch Bereitstellen eines Luftdrucks, der hoch genug ist, um das Substrat in Abwesenheit einer äußeren Kraft in einer konvexen Konfiguration zu halten, aber niedrig genug, um ein Verformen des Substrats in die Übertragungskonfiguration zu ermöglichen.

11. Verfahren nach einem der Ansprüche 6 bis 10, wobei das flexible Substrat (26), wenn es sich in der Übertragungskonfiguration befindet, im Wesentlichen konkav ist.

12. Verfahren nach den Ansprüchen 6 bis 11, wobei die Materialschicht (50), die auf das flexible Substrat (26) aufgebracht wird, eine Flüssigkeitsschicht umfasst.

13. Verfahren nach den Ansprüchen 6 bis 12, wobei die Materialschicht (50), die auf das flexible Substrat (26) aufgebracht wird, eine Feststoffschicht umfasst.

14. Verfahren nach Anspruch 13, weiter umfassend das Aufbringen einer Klebstoffschicht (52) auf die Feststoffschicht.

15. Verfahren nach Anspruch 14, wobei der Schritt des Übertragens der Materialschicht (50) von dem flexiblen Substrat (26) auf die Blattvorderkante (10) des Windkraftanlagenblatts (12) das Aushärten der Materialschicht auf dem flexiblen Substrat umfasst.

## Revendications

1. Appareil (20) pour appliquer une couche de matériau (50) sur un bord d'attaque (10) d'une pale d'éolienne (12), l'appareil comprenant :
un substrat flexible (26) capable de supporter la couche de matériau (50), le substrat flexible étant reconfigurable entre des configurations convexe et concave ; et
une structure de support (27) pour supporter le substrat flexible (26) dans les configurations concave et convexe,
dans lequel, le substrat flexible (26) et la structure de support (27) sont configurés de sorte qu'en utilisation, avec le substrat flexible dans la configuration convexe, la couche de matériau (50) peut être offerte jusqu'au bord d'attaque (10) de la pale d'éolienne (12) sous une forme convexe pour définir une zone initiale de contact entre la couche du matériau et le bord d'attaque, et ensuite, le substrat flexible peut être reconfiguré dans la configuration concave en augmentant la zone de contact entre la couche de matériau et le bord d'attaque, de sorte que la couche de matériau est appliquée sur, et adopte les contours de, au moins une partie du bord d'attaque.

2. Appareil selon la revendication 1, dans lequel la structure de support (27) est configurée pour supporter le substrat flexible (26) de sorte que le substrat flexible est reconfigurable de la configuration convexe à la configuration concave lors de la pression du substrat flexible contre le bord d'attaque (10) de la pale d'éolienne (12).

3. Appareil selon la revendication 1 ou la revendication 2, dans lequel la structure de support (27) et le substrat flexible (26) définissent ensemble un récipient présentant un volume interne (30), et dans lequel la forme du volume interne change lorsque le substrat flexible est reconfiguré entre la configuration convexe et la configuration concave.

4. Appareil selon la revendication 3, dans lequel la structure de support (27) comprend une alimentation en air configurée pour contrôler la pression d'air dans le volume interne (30) pour gonfler et/ou dégonfler le substrat flexible (26).

5. Appareil selon l'une quelconque des revendications précédentes, dans lequel la structure de support (27) est configurée pour supporter le substrat flexible (26) de sorte que le substrat flexible est en outre reconfigurable dans une configuration d'application pendant l'application de la couche de matériau (50) sur le substrat flexible.

6. Procédé d'application d'une couche de matériau (50) sur un bord d'attaque (10) d'une pale d'éolienne (10), le procédé comprenant les étapes consistant à :
fournir une couche de matériau (50) appliquée sur un substrat flexible (26) ;
agencer le substrat flexible (26) par rapport au bord d'attaque (10) de la pale d'éolienne (12) avec le substrat flexible dans une configuration de présentation de sorte qu'une zone initiale de contact soit définie entre la couche de matériau et le bord d'attaque ;
reconfigurer le substrat flexible (26) dans une configuration de transfert dans laquelle le substrat flexible adopte les contours du bord d'attaque (10) en augmentant la zone de contact entre la couche de matériau et le bord d'attaque ; et
transférer la couche de matériau du substrat flexible (26) au bord d'attaque (10) de la pale d'éolienne.

7. Procédé selon la revendication 6, comprenant l'étape consistant à provoquer un déplacement relatif du substrat flexible (26) et du bord d'attaque (10) l'un vers l'autre pour augmenter la zone de contact et reconfigurer le substrat flexible dans la configuration de transfert.

8. Procédé selon la revendication 6 ou la revendication 7, dans lequel, lorsque le substrat flexible (26) est dans la configuration de présentation, le substrat flexible est agencé pour présenter une surface sensiblement convexe au bord d'attaque (10) de la pale d'éolienne (12).

9. Procédé selon la revendication 8, comprenant le gonflage du substrat flexible (26) pour agencer le substrat flexible dans la configuration de présentation.

10. Procédé selon la revendication 9, comprenant le gonflage du substrat flexible (26) en fournissant une pression d'air qui est suffisamment élevée pour maintenir le substrat dans une configuration convexe en l'absence de force externe, mais suffisamment basse pour permettre au substrat de se déformer dans la configuration de transfert.

11. Procédé selon l'une quelconque des revendications 6 à 10, dans lequel, lorsque le substrat flexible (26) est dans la configuration de transfert, le substrat flexible est sensiblement concave.

12. Procédé selon les revendications 6 à 11, dans lequel la couche de matériau (50) appliquée sur le substrat flexible (26) comprend une couche liquide.

13. Procédé selon les revendications 6 à 12, dans lequel la couche de matériau (50) appliquée sur le substrat flexible (26) comprend une couche solide.

14. Procédé selon la revendication 13, comprenant en outre l'étape consistant à appliquer une couche d'adhésif (52) sur la couche solide.

15. Procédé selon la revendication 14, dans lequel l'étape consistant à transférer la couche de matériau (50) du substrat flexible (26) au bord d'attaque (10) de la pale d'éolienne (12) comprend le durcissement de la couche de matériau sur le substrat flexible.
